(19) **Europäisches Patentamt European Patent Office Office européen des brevets**

(11) **EP 4 679 131 A1**

(12) **EUROPEAN PATENT APPLICATION**

(43) Date of publication:
**14.01.2026 Bulletin 2026/03**

(21) Application number: **25188394.8**

(22) Date of filing: **09.07.2025**

(51) International Patent Classification (IPC):
**G01S 7/41** *(2006.01)*    **G01S 7/48** *(2006.01)*
**G01S 17/34** *(2020.01)*    **G01S 17/42** *(2006.01)*
**G01S 17/66** *(2006.01)*    **G01S 17/931** *(2020.01)*

(52) Cooperative Patent Classification (CPC):
**G01S 17/931; G01S 7/417; G01S 7/4808;
G01S 17/34; G01S 17/42; G01S 17/66**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.07.2024 IN 202441053336**

(71) Applicant: **ZF Friedrichshafen AG
88046 Friedrichshafen (DE)**

(72) Inventors:
• **Altendorfer, Richard
  56072 Koblenz (DE)**
• **Shahare, Kunal
  490023 Bhilai (IN)**
• **Adam, Ganesh
  413005 Solapur (IN)**

(74) Representative: **ZF Friedrichshafen AG
Gewerblicher Rechtsschutz
Löwentalerstraße 20
88046 Friedrichshafen (DE)**

(54) **PRODUCING SENSOR DATA FROM DETECTION AND PREDICTION DATA**

(57)    A method for producing sensor data (10) involves a sensor (2) detecting a relative bearing (R) of an object (6) at a sensor null point (4) as a preliminary sensor bearing (VSL1,2,...) at preliminary times (t1,2,...), and a target sensor bearing (ZSL) at a target time (tz), and a computing module (12) predicting for the preliminary sensor bearings (VSL1,2,...), on the basis of an object motion model (14), a respective prediction sensor bearing (PSL1,2,...) at the target time (tz), and the sensor data (10) being formed as a set comprising the target sensor bearing (ZSL) and the prediction sensor bearing (PSL1,2,...) at the target time (tz).

A method for controlling a motor vehicle (40) in surroundings (44) having the object (6) involves the sensor data (10) with regard to the object (6) being produced and an actuator (42) being triggered with regard to the object (6) on the basis of the sensor data (10).

A sensor module (50) contains the sensor (2) and the computing module (12) and an output (52) for the sensor data (10).

A motor vehicle (40) contains the sensor module (50).

Fig. 2

**Description**

The invention relates to sensor data that a sensor delivers from an object that it detects, or measures. The sensor data are relative bearings of the object, or of a measurement point, relative to a sensor null point of the sensor. The sensor data are also referred to as a point cloud.

DE 10 2019 216 147 B3 discloses the following: a vehicle has at least one environment sensor. This is used to detect the surroundings of the vehicle. Naturally, the vehicle can have more than one environment sensor. The environment sensor is implemented such that it can generate image data from which a 3D point cloud can be produced. By way of example, the at least one environment sensor may be in the form of a camera, for example in the form of a mono or stereo camera, or in the form of a LIDAR. An implementation as an imaging radar or 3D ultrasonic sensor would also be possible, in which cases a range would be reduced compared with the implementation by means of a camera or a LIDAR.

The object of the present invention is to improve the production of such point clouds in the form of sensor data of the sensor.

The object is achieved by a method according to Patent Claim 1. Preferred or advantageous embodiments of the invention and of other invention categories are obtained from the other claims, the description that follows and the accompanying figures.

The method is used to produce sensor data. The sensor data are sensor data that are delivered by a sensor. The sensor has a sensor null point. The sensor null point is a geometric location, that is to say a sensor null location or point of origin, to which the sensor data are referenced. The sensor is configured to detect a relative bearing of an object relative to the sensor null point. The relative bearing in this instance relates in particular not to the whole object but rather to a measurement point on the object, that is to say a specific point or location on the object. If the sensor is a lidar sensor, for example, the relative bearing denotes the relative bearing of the point of impact of a measurement laser beam on the object relative to the sensor null point. Consecutive different measurements can also result in different locations/points on the object being hit. As such, a certain measurement uncertainty is obtained even with regard to one and the same object.

The method involves the sensor detecting a respective first preliminary sensor bearing of the object as the aforementioned relative bearing at at least a first time, referred to here as a "preliminary time". Respective further second, third, fourth, and so on, preliminary sensor bearings of the object can thus be detected at further, in each case temporally successive, preliminary times, that is to say a second, third, fourth, and so on, preliminary time. All the preliminary sensor bearings are referenced to the sensor null point as relative bearings.

The sensor additionally detects a target sensor bearing of the object as the relative bearing at a target time. The target time is at a time that comes after all the preliminary sensor bearings.

The invention here anticipates the same object being detected in each case at the respective preliminary times and the target time, that is to say being in the detection range of the sensor during or for all these detections.

The method furthermore comprises a computing module carrying out the following:

The computing module predicts a respective virtual prediction sensor bearing of the object at the target time for each of the preliminary sensor bearings (first, second, third, and so on), which were thus actually detected at the respective preliminary times (first, second, third, and so on). This too is again a relative bearing (now predicted, however) of the object relative to the sensor null point. The prediction sensor bearing thus predicts the relative bearing of the object with regard to the sensor null point at the target time. With regard to an inertial system in which the sensor and the object are situated and possibly move, the relative bearing takes account of, or contains, changes of location both of the object and of the sensor. Here, the computing module predicts this bearing on the basis of an object motion model of the object. The object motion model is a motion model of the object relative to the sensor null point. It describes how, or to where, the object moves (or does not move) relative to the sensor/sensor null point between the respective preliminary time and the target time.

Finally, the sensor data are formed, or produced, in particular by the computing module, as a set comprising the target sensor bearing and the prediction sensor bearings.

In other words, the computing module predicts a (virtual) relative bearing that would have been measured at the target time. The basis for this is a relative bearing actually measured, or detected, at the preliminary time (that is to say an actual relative bearing), the preliminary sensor bearing. The actual measurement at the respective preliminary time is thus shifted "virtually" in time to the later target time. In other words, the motion of the object between the preliminary time and the target time is used to reproduce the measurement of the preliminary time virtually at the target time. The target time here comes after all the preliminary times, that is to say is the last, in terms of chronology, measurement time of the sensor with regard to the sensor data. That is to say that all the measurements, the actual measurements at the target time and the predicted measurements from the preliminary times, are cumulated in time, or "the same time", at this time. The computation itself can take place at any time, "at the ... time" merely meaning that the computation relates to the variables applicable at the respective time.

The sensor data thus contain the target sensor bearing of the object that was actually measured at the target time and the measurements predicted virtually for the target time, which actually took place at the preliminary times.

The sensor data therefore contain not only a (real) measured value from one and the same object at the target time but additionally at least one or in particular multiple (virtual) measured values (according to the number of preliminary times). Sensor data in the form of an artificially/predictively compressed point cloud are therefore obtained. The number of "points" (relative bearings) is increased. In particular if corresponding sensor data are used for further processing in an AI module, this results in advantages: this is because it is known from practice that AI modules with more densely filled point clouds, that is to say point clouds with more measurement points, work much better than with less filled point clouds (fewer measurement points).

Merely for the sake of simplicity, the method is explained here for a single object and an individual measurement point at each of the times (preliminary times and target time), but also in a manner representative of multiple measurement points per time and/or multiple objects.

In one preferred embodiment, sensor data and therefore the real and virtual/predicted relative bearings are determined as 3D data or as 4D data. "Determined", here, is representative of "detected" and "predicted". In other words, the relevant sensor is thus a 3D or 4D sensor. The sensor data thus contain 3D or 4D information. 3D information is in particular information that comprises azimuth and elevation and distance, or azimuth and radial velocity and distance of the object in relation to the sensor. The distance information should always be present in the 3D and 4D data (it is also measured by radar and lidar), otherwise prediction becomes much more difficult (see also so-called "bearings-only tracking"). 4D data include not only this direction and range information but furthermore, in particular, the time derivative of the range of a respective measurement point from the sensor, or sensor null point, as well. Such sensor data are particularly easy to handle when processing them. 3D data are thus in particular (see below for nomenclature): $(r, \psi, \theta)$ or $(r, \psi, \dot{r})$. 4D data are in particular $(r, \psi, \theta, \dot{r})$.

In one preferred embodiment, the sensor data (relative bearings) are determined/measured/predicted for a sensor that is attached to a carrier. The carrier has a carrier null point. The above statements for the sensor null point also apply, mutatis mutandis, to the carrier null point, that is to say that this is also a null location, or local point. Such a carrier may be a motor vehicle, for example, in which the sensor is arranged or installed. In this embodiment, the computing module predicts the respective prediction sensor bearing for each of the preliminary sensor bearings as follows:
The computing module first determines for the respective preliminary sensor bearing a respective preliminary carrier bearing at the respective preliminary time. The carrier bearing is also a relative bearing of the object relative to the carrier null point. In other words, a coordinate transformation from the sensor coordinate system to the carrier coordinate system takes place at the preliminary time.

The computing module takes the object motion model of the object (now seen relative to the carrier null point) as a basis for predicting for each preliminary carrier bearing a respective prediction carrier bearing at the target time. Here too, the following applies: with regard to an inertial system in which the carrier with the sensor and the object are situated and possibly move, the relative bearing takes account of, or contains, changes of location both of the object and of the carrier with the sensor. The prediction carrier bearing is the predicted bearing of the measured preliminary sensor bearing at the target time with regard to the carrier null point. The above explanations with regard to prediction of the prediction sensor bearing apply here, mutatis mutandis, to the carrier bearing.

The computing module furthermore determines for the respective prediction carrier bearing (now at the target time) relative to the carrier null point the associated prediction sensor bearing of the object relative to the sensor null point. In other words, a coordinate back-transformation from the carrier coordinate system to the sensor coordinate system takes place at the target time.

In other words, in addition to the approach explained above, a transformation between the sensor reference system and the carrier reference system is interposed here. In concise terms, the sensor data are first acquired in the sensor reference system at the preliminary times, transformed to the carrier reference system, where the object shift between the primary time and the target time is predicted, and then the results are transformed back from the carrier reference system to the sensor reference system again.

Investigations are therefore possible in the carrier reference system, for example a vehicle reference system, which means that for example a proper motion of the carrier can also more easily be taken into account, see below. If the carrier is a vehicle, the carrier null point is e.g. the vehicle null point at the centre of the rear axle of the vehicle.

In one preferred embodiment, the sensor data/relative bearings are produced for a sensor that is movable in an inertial system. The inertial system has an inertial null point; the above statements pertaining to the carrier null point, or sensor null point, apply mutatis mutandis here. This embodiment can be combined in particular with the above embodiment based on the "carrier" if for example the carrier is a vehicle that is moved over ground, and therefore in the inertial system, which then corresponds e.g. to the world coordinate system.

In this embodiment, the computing module predicts the respective prediction sensor bearing for each of the preliminary sensor bearings as follows:
A preliminary inertial bearing at the respective preliminary time of the object relative to the inertial null point is determined for the respective preliminary sensor bearing. In other words, a coordinate transformation from the sensor coordinate system to the inertial coordinate system takes place at the preliminary time.

The computing module then takes the object motion model (this is now a model adjusted only with regard to the underlying null point/reference point, specifically relative to the inertial null point) as a basis for predicting a respective prediction inertial bearing of the object relative to the inertial null point at the respective target time.

Next, the computing module determines for the respective prediction inertial bearing the prediction sensor bearing of the object relative to the sensor null point, with everything now again referenced to the target time. However, the motion of the sensor is now taken into account - with regard to the inertial null point - on the basis of a sensor motion model. In other words, a coordinate back-transformation from the inertial coordinate system to the sensor coordinate system takes place at the target time taking account of the possible change of location of the sensor. The sensor motion model describes how the sensor - starting from the respective preliminary time - has moved to the target time.

In other words, as explained above, mutatis mutandis, for the carrier, here too a transformation of the sensor data from the sensor system to the inertial system is carried out, the motion prediction being carried out in said inertial system. Next, a back-transformation from the inertial system to the sensor system is carried out, but now also in respect of a predicted motion of the sensor itself (for example mounted on the carrier, motion of the carrier).

As explained, in particular a combination with the aforementioned embodiment is carried out, transformation first taking place from the sensor reference system to the carrier reference system and from there to the inertial system, the prediction being carried out in the inertial system and then the predicted results being transformed back to the carrier reference system again and finally to the sensor reference system.

The term "bearing" within the context of the present invention thus generally describes respective relative positions, in particular between the object and the carrier, the object and the sensor, or the object and the inertial system.

In particular, the inertial null point chosen is either the location of the sensor null point or that of the carrier null point, either at one of the preliminary times or at the target time. In particular, the inertial null point chosen, recorded as it were, is the sensor null point or the carrier null point (if available) at the first of the preliminary times, in particular with reference to the inertial system. Applicable computations can therefore be performed particularly easily.

In one preferred embodiment, the object motion model is a constant velocity model referenced to an inertial system, that is to say a constant velocity model "over ground". Alternatively or additionally, if such a model or applicable input data therefor is/are available, the sensor motion model is a CTRV (Constant Turn Rate and Velocity) model, alternatively a CTRA (Constant Turn Rate and Acceleration) model or a different motion model (that is to say other motion models known from vehicle dynamics). Such motion models are particularly easy to handle in applicable computations. As such, the proper motions of the sensor and/or the object are thus forecast.

In one preferred embodiment, the sensor detects a radial velocity of the object (measurement point) in the radial direction with respect to the sensor null point as part of the relative bearing at at least one of the preliminary times and/or at the target time. The computing module then takes account of the radial velocity when determining the applicable (in particular predicted) relative bearings, in particular in the object motion model, or when predicting the object motion. In particular, it takes account of it when determining the prediction sensor bearings. Determining the prediction sensor bearings involves using in particular no sensor data, but rather the additionally available vehicle data, e.g. velocity (optionally acceleration) and yaw rate. In particular, the basis taken for this is a constant velocity model. In particular, the computations involve making the assumption that objects (the measurement points thereon) move only in the radial sensor direction over ground (in the inertial system). In contrast, for example, to standard lidars as sensors, which cannot determine radial velocity, it is thus also possible, for example, to use radar sensors or FMCW lidars as sensors for the method. Object tracking, or prediction, can thus be taken into account in the method also with respect to altered spacings from the sensor (change of radial spacing), resulting in more exact predictions in the sensor data.

The object of the invention is also achieved by a method according to Patent Claim 7.

Said method is used for controlling a motor vehicle. The motor vehicle contains the aforementioned sensor and the aforementioned computing module and an actuator. The vehicle is controlled/moved in, or through, surroundings, the surroundings containing the aforementioned object. The method involves using the aforementioned method to produce the sensor data with regard to the object. The actuator is then triggered with regard to the object on the basis of the sensor data.

The object is for example a person in the surroundings who needs to be taken into account by the vehicle. The vehicle function is for example slowing the vehicle in order to stop before the person is reached (e.g. automatic emergency braking) or a steering movement in the vehicle in order to avoid the person.

The method and at least some of the possible embodiments thereof, and also the respective advantages, have already been explained, mutatis mutandis, in connection with the inventive method for producing the sensor data.

As already mentioned above, in particular the method for producing the sensor data allows compressed point clouds to be rendered usable in a motor vehicle, in order to permit improved triggering of the actuator on the basis of the sensor data.

In one preferred embodiment, the actuator is triggered in the method in such a way that the sensor data are supplied to an AI module, which generates an output signal. The actuator is then triggered by the output signal. In other words, the invention allows sensor data to be made available to the AI module in the form of a more compressed point cloud, this being the reason that said AI module can operate in an improved manner.

The object of the invention is also achieved by a sensor module according to Patent Claim 9.

Said sensor module contains the sensor and the computing module that were explained above. The sensor module is configured to carry out the inventive method for producing the sensor data that was explained above. The sensor module furthermore contains an output for providing the determined sensor data and is configured to provide the determined sensor data at the output.

In terms of function, the sensor module therefore has the advantages of the inventive method that were explained above.

The sensor module and at least some of the possible embodiments thereof, and also the respective advantages, have already been explained, mutatis mutandis, in connection with the inventive method for producing the sensor data.

The object of the invention is also achieved by a motor vehicle according to Patent Claim 10. Said motor vehicle contains the inventive sensor module. The motor vehicle thus also has the aforementioned advantages.

The motor vehicle and at least some of the possible embodiments thereof, and also the respective advantages, have already been explained, mutatis mutandis, in connection with the inventive sensor module and method for producing the sensor data and for controlling the motor vehicle.

The invention is based on the following insights, observations and considerations and also has the preferred embodiments that follow. Some of these embodiments are also called "the invention" to simplify matters. The embodiments here can also contain parts or combinations of the aforementioned embodiments or can be consistent therewith and/or can possibly also encompass hitherto unmentioned embodiments.

The invention is based on the insight that forecasting sensor data should generally be avoided for sensor measurement, since the measurement state is normally less than the estimated state and motion models for the forecast are specified in estimation filters with a predictor-corrector structure for the estimated state and not for the measurement state. There are multiple methods (measurement data buffering, reprocessing, and so on) that ensure temporal consistency between asynchronous measurements and state estimations for the filtering without the measurements needing to be forecast.

The invention is based on the concept that there are nevertheless application cases in which sensor data could be forecast, e.g. for the accumulation of point clouds over multiple measurement times, in order to make the measured point cloud denser. This is particularly important for the application of neural networks, which work all the better the more information (denser point clouds) they receive.

Exteroceptive sensors for autonomous driving generally measure relative position and (parts of) relative velocity. In particular radar sensors can measure only relative radial velocity or relative range rate using the Doppler effect; most lidar sensors cannot measure relative velocity at all, with the exception of FMCW (Frequency-Modulated Continuous Wave) lidar sensors, which measure relative radial velocity similarly to the aforementioned radar sensors.

The invention provides a method for forecasting measurements that contain both relative 2D or 3D position and relative 2D or 3D radial velocity. The method can also be applied to measurements without relative radial velocity (e.g. by standard lidar sensors), albeit with reduced accuracy.

First, a measured point is transformed from the coordinates of a non-inertial system (sensor) to global, inertial, over-ground coordinates and the measured point motion (object) over the floor is forecast (predicted) using a constant velocity model, then the ego motion (motion of the sensor in the inertial system) is forecast using the constant turn rate and acceleration (CTRA) model or a different motion model and then the measured point is transformed back to the coordinates of the non-inertial system (sensor). If ego acceleration is not available or is available only in poor quality, ego acceleration can be set to zero in the formulae below: this reduces the model to a constant turn rate and velocity (CTRV). Since the sensors above cannot be used to measure tangential relative velocity, it is assumed that the measured points move over the floor/ground only in the radial direction, based on the coordinate origin of the sensor (sensor null point). Such an assumption is also made in "S. Baratam, "Radar-guided monocular depth estimation and point cloud fusion for 3d object detection," Master's thesis, Delft University of Technology, 2022". Taking account of radial velocity moderates "trails" or comet-tail-like concentrations of measurement points in the radial direction. This allows realistic predictions to be made that tally with general radar and lidar measurements.

The following nomenclature is agreed:

| Abbreviation | Meaning | Coordinate system |
|---|---|---|
| OG | Object/measurement with reference to the floor/ground | Floor-based coordinate system with periodic origin and orientation reset to the ISO 23150 vehicle road-level coordinate system |
| OE | Object/measurement with reference to the EGO/host vehicle | ISO 23150 vehicle rear-axle coordinate system |

(continued)

| Abbreviation | Meaning | Coordinate system |
|---|---|---|
| OS | Object/measurement with reference to the sensor | ISO 23150 sensor coordinate system |
| SE | Sensor location with reference to the EGO/host vehicle | ISO 23150 vehicle rear-axle coordinate system |
| E | Ego motion with reference to the floor/ground | Floor-based coordinate system with periodic origin and orientation reset to the ISO 23150 vehicle road-level coordinate system |

The following intermediate signals are used for the forecast: radial velocity over the floor/ground $\dot{r}$OG and object position in the ego coordinate system (xOE, yOE) as a function of the horizontal sensor measurements (rOS, $\dot{r}$OS, $\psi$OS), ego motion (aE, vE , $\dot{\psi}$E) and sensor mounting position (xSE, ySE):

$$\dot{r}_{OG} = \dot{r}_{OS} + v_E \cos(\psi_{OS}) - \dot{\psi}_E y_{SE} \cos(\psi_{OS})$$
$$+ \dot{\psi}_E x_{SE} \sin(\psi_{OS}) \tag{1}$$
$$x_{OE} = x_{SE} + r_{OS} \cos(\psi_{OS})$$
$$y_{OE} = y_{SE} + r_{OS} \sin(\psi_{OS})$$

Horizontal sensor measurements (radial spacing, radial velocity, azimuth angle) are obtained from 3D measurements using rOS = rOS|3D cos( θOS ) and $\dot{r}$OS = $\dot{r}$OS|3D cos( θOS ), with θOS the elevation angle. The predicted horizontal position in Cartesian coordinates is

$$x_{OS}(t) = \cos\left(\dot{\psi}_E t\right)\left(x_{OE} + \cos(\psi_{OS})\dot{r}_{OG}t - (v_E + a_E t)\frac{\sin\left(\dot{\psi}_E t\right)}{\dot{\psi}_E} + a_E\frac{1 - \cos\left(\dot{\psi}_E t\right)}{\dot{\psi}_E^2}\right)$$
$$+ \sin\left(\dot{\psi}_E t\right)\left(y_{OE} + \sin(\psi_{OS})\dot{r}_{OG}t - (v_E + a_E t)\frac{1 - \cos\left(\dot{\psi}_E t\right)}{\dot{\psi}_E} - a_E\frac{\sin\left(\dot{\psi}_E t\right) - \dot{\psi}_E t}{\dot{\psi}_E^2}\right) - x_{SE}$$

$$y_{OS}(t) = \cos\left(\dot{\psi}_E t\right)\left(y_{OE} + \sin(\psi_{OS})\dot{r}_{OG}t - (v_E + a_E t)\frac{1 - \cos\left(\dot{\psi}_E t\right)}{\dot{\psi}_E} - a_E\frac{\sin\left(\dot{\psi}_E t\right) - \dot{\psi}_E t}{\dot{\psi}_E^2}\right)$$
$$- \sin\left(\dot{\psi}_E t\right)\left(x_{OE} + \cos(\psi_{OS})\dot{r}_{OG}t - (v_E + a_E t)\frac{\sin\left(\dot{\psi}_E t\right)}{\dot{\psi}_E} + a_E\frac{1 - \cos\left(\dot{\psi}_E t\right)}{\dot{\psi}_E^2}\right) - y_{SE}$$

And the predicted horizontal velocity is obtained as

$$\dot{x}_{OS}(t) = -\sin\left(\dot{\psi}_E t\right)\left(\dot{\psi}_E x_{OE} + \dot{\psi}_E \cos(\psi_{OS})\dot{r}_{OG}t - \sin(\psi_{OS})\dot{r}_{OG} + a_E\frac{1 - \cos\left(\dot{\psi}_E t\right)}{\dot{\psi}_E}\right)$$
$$+ \cos\left(\dot{\psi}_E t\right)\left(\dot{\psi}_E y_{OE} + \dot{\psi}_E \sin(\psi_{OS})\dot{r}_{OG}t + \cos(\psi_{OS})\dot{r}_{OG} - v_E - a_E\frac{\sin\left(\dot{\psi}_E t\right)}{\dot{\psi}_E}\right)$$

$$\dot{y}_{OS}(t) = -\sin\left(\dot{\psi}_E t\right)\left(\dot{\psi}_E\, y_{OE} + \dot{\psi}_E \sin\left(\psi_{OS}\right)\dot{r}_{OG} t + \cos\left(\psi_{OS}\right)\dot{r}_{OG} - v_E - a_E \frac{\sin\left(\dot{\psi}_E t\right)}{\dot{\psi}_E}\right)$$

$$-\cos\left(\dot{\psi}_E t\right)\left(\dot{\psi}_E\, x_{OE} + \dot{\psi}_E \cos\left(\psi_{OS}\right)\dot{r}_{OG} t - \sin\left(\psi_{OS}\right)\dot{r}_{OG} + a_E \frac{1 - \cos\left(\dot{\psi}_E t\right)}{\dot{\psi}_E}\right)$$

Velocities and accelerations (not shown) are, as expected, time derivatives of the above positions. The forecast radial velocity is then obtained from the projection

$$\dot{r}_{OS}(t) = \dot{x}_{OS}(t)\cos\left(\psi_{OS}(t)\right) + \dot{y}_{OS}(t)\sin\left(\psi_{OS}(t)\right)$$,

with $\psi_{OS}(t) = \mathrm{arctan2}(y_{OS}(t), x_{OS}(t))$. The forecast radial velocity over the floor is obtained from equation (1), all the variables being forecast on the basis of t.

The forecast horizontal position contains singularities in $\dot{\psi}_E$; however, the position can be analytically continued for $\dot{\psi}_E = 0$, for example locally using Taylor development. $O(\dot{\psi}_E^3)$ results in the following for the following singular partial expressions:

$$\frac{\sin\left(\dot{\psi}_E t\right)}{\dot{\psi}_E} \approx t - \frac{1}{6}\dot{\psi}_E^2 t^3, \qquad \frac{1 - \cos\left(\dot{\psi}_E t\right)}{\dot{\psi}_E} \approx \frac{1}{2}\dot{\psi}_E t^2$$

$$\frac{\sin\left(\dot{\psi}_E t\right) - \dot{\psi}_E t}{\dot{\psi}_E^2} \approx \frac{1}{6}\dot{\psi}_E t^3, \qquad \frac{1 - \cos\left(\dot{\psi}_E t\right)}{\dot{\psi}_E^2} \approx \frac{1}{2}t^2 - \frac{1}{24}\dot{\psi}_E^2 t^4$$

With this partial Taylor development, the forecast horizontal position for small values of $|\dot{\psi}_E|$ is, for example:

$$x_{OS}(t) = \cos\left(\dot{\psi}_E t\right)\left(x_{OE} + \cos\left(\psi_{OS}\right)\dot{r}_{OG} t - (v_E + a_E t)\left(t - \frac{1}{6}\dot{\psi}_E^2 t^3\right) + a_E\left(\frac{1}{2}t^2 - \frac{1}{24}\dot{\psi}_E^2 t^4\right)\right)$$

$$+ \sin\left(\dot{\psi}_E t\right)\left(y_{OE} + \sin\left(\psi_{OS}\right)\dot{r}_{OG} t - (v_E + a_E t)\left(\frac{1}{2}\dot{\psi}_E t^2\right) - a_E \frac{1}{6}\dot{\psi}_E t^3\right) - x_{SE}$$

$$y_{OS}(t) = \cos\left(\dot{\psi}_E t\right)\left(y_{OE} + \sin\left(\psi_{OS}\right)\dot{r}_{OG} t - (v_E + a_E t)\left(\frac{1}{2}\dot{\psi}_E t^2\right) - a_E \frac{1}{6}\dot{\psi}_E t^3\right)$$

$$- \sin\left(\dot{\psi}_E t\right)\left(x_{OE} + \cos\left(\psi_{OS}\right)\dot{r}_{OG} t - (v_E + a_E t)\left(t - \frac{1}{6}\dot{\psi}_E^2 t^3\right) + a_E\left(\frac{1}{2}t^2 - \frac{1}{24}\dot{\psi}_E^2 t^4\right)\right) - y_{SE}$$

According to the invention, a forecast of sensor data is obtained using range measurements.

Other features, effects and advantages of the invention result from the description of a preferred exemplary embodiment of the invention that follows and the accompanying figures, in which, in each case in a schematic block diagram:

Figure 1    shows a sensor module with a sensor during the detection of relative positions of an object at two preliminary times and the predictions for a target time,

Figure 2    shows the sensor of the sensor module from Figure 1 during the detection of the object at a target time with the predictions, and resultant sensor data,

Figure 3    shows the sensor from Figures 1-2 attached to a carrier and

Figure 4    shows said sensor alternatively moving in an inertial system, in each case during the detection of a relative position of the object at a preliminary time and the prediction for the target time,

Figure 5    shows a flowchart for a method for producing the sensor data.

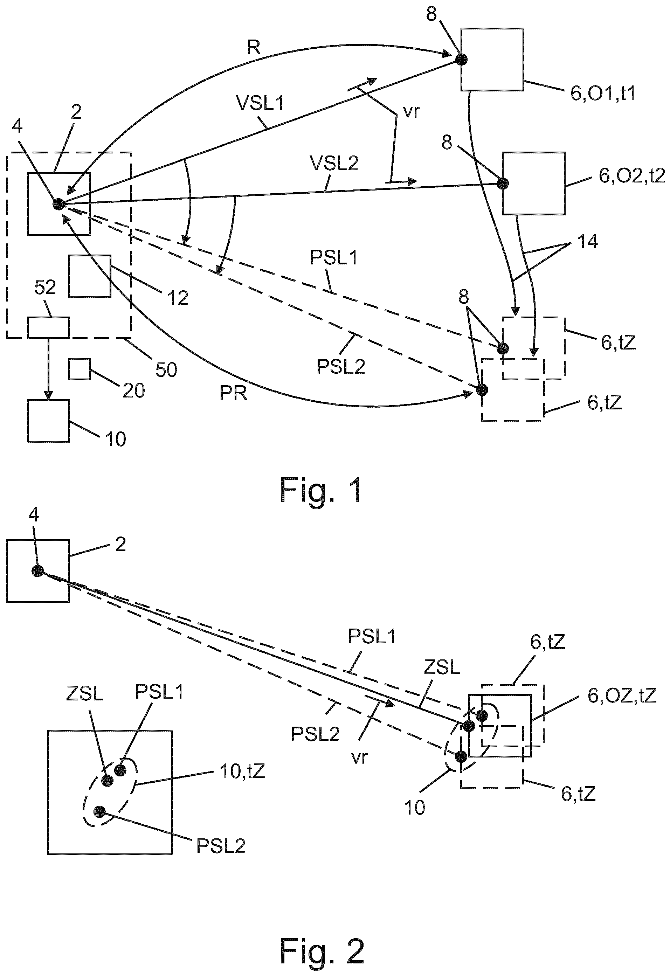

Figure 1 shows a sensor 2, here a lidar sensor, which has a sensor null point 4. The sensor 2 is configured to detect a relative bearing R of an object 6 relative to the sensor null point 4. To be more precise, the detection, or measurement, results in the relative bearing R of a measurement point 8 on the object 6 being detected, here the point of impact of a measurement laser beam, not explained in more detail, of the sensor 2. The sensor null point 4 is the geometric location to which the measurements/measurement data of the sensor 2/relative bearings R are referenced.

A method for producing sensor data 10 of the sensor 2, that is to say measurement data that the sensor 2 delivers from the object 6, is explained hereinafter:
At a first preliminary time t1, the sensor 2 detects, that is to say measures, a first preliminary sensor bearing VSL1 of the object as the relative bearing R of the object 6, or measurement point 8, in relation to the sensor 2, or the sensor null point 4 thereof. At a second preliminary time t2, which comes after the first in terms of chronology, the object 6 has moved relative to the sensor 2 from a first location O1 to a second location O2 and therefore adopts an altered relative bearing R in relation to the sensor 2, or sensor null point 4. At the second preliminary time T2, the sensor 2 therefore detects a different, second preliminary sensor bearing VSL2 of the object 6. At times t3,4,..., which each again come later, the sensor 2 detects further relative bearings R, that is to say preliminary sensor bearings VSL3,4,..., this no longer being shown here for the sake of clarity. These measurements form a measurement series as it were.

Figure 2 explains how the object 6 has moved to a location OZ at a target time tZ that comes after all the preliminary times t1,2,... - that is to say at a "last" target time. The sensor 2 also detects the relative bearing R at the target time tZ, but now in the form of a target sensor bearing ZSL. This completes the measurement series.

The method now involves the computing module 12, indicated symbolically in Figure 1, being used. The sensor 2 and the computing module 12 together form a sensor module 50. The sensor module 50 has an output 52 at which it provides, or outputs, the sensor data 10. For the sake of simplicity, only the sensor 2 of the sensor module 50 is now depicted hereinafter.

The computing module 12 uses an object motion model 14, which is indicated by an arrow in the figure. Said model describes how the object 6 moves, starting from the first preliminary time t1, and where it will consequently be at the target time TZ on the basis of a prediction.

On that very basis, the computing module 12 predicts for each of the preliminary sensor bearings VSL1,2... measured at the preliminary times t1,2... how the object 6 and therefore the measurement point 8 on the object 6 would change with respect to its relative bearing R in relation to the sensor 2 and where it would presumably be at the target time tZ. In other words, the computing module 12 takes the object motion model 14 of the object 6 as a basis for determining for each of the preliminary sensor bearings VSL1,2,... (measurement data at the respective preliminary time t1,2,...) a predicted relative bearing PR in the form of a respective prediction sensor bearing PSL1,2,..., all at the target time tZ.

Finally, the sensor data 10 are formed as a set comprising the target sensor bearing ZSL plus all determined prediction sensor bearings PSL1,2,.... All sensor data 10 are thus referenced to the target time tZ, the target sensor bearing ZSL reflecting the only relative bearing R actually measured at the target time tZ, but all prediction sensor bearings PSL1,2,... are relative bearings PR predicted virtually for the target time tZ, which were not actually measured at the target time tZ but rather have been predicted virtually for the target time tZ at the respective preliminary times t1,2,... and using the object motion model 14. Ultimately, sensor data 10 are obtained, the relative bearings of the measurement points 8, all valid at the target time tZ, with (measurement) points multiplied by the number of preliminary sensor bearings VSL1,2,....

In the example, the sensor data 10 therefore contain not only the one measurement point of the target sensor bearing ZSL but also the number of three measurement points tripled by the two additional prediction sensor bearings PSL1,2.

Figure 2 symbolically shows that 3D data are determined in the present case as the relative bearings R and PR and therefore as the sensor data 10: both the predicted prediction sensor bearings PSL1,2,... and the target sensor bearing ZSL are 3D data. Figure 2 shows this symbolically in the form of an output signal 20 of the sensor 2 (or of the sensor module 50) in the form of a 3D measurement image showing the sensor data 10 as local points that each have an associated range (not shown in the figure) of the measurement point 8, or object 6. This reflects how an observer would "see" the bearing of the measurement points 8 (actually measured or predicted) in space from the sensor null point 4, or how the measurement points 8 would be portrayed in a camera depth image in the style of a camera.

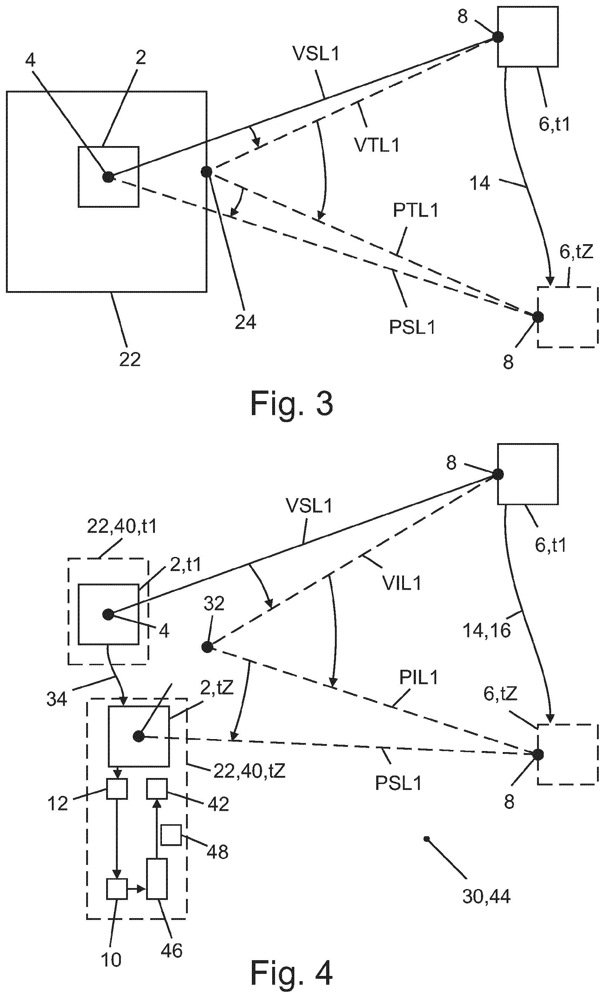

Figure 3 shows the sensor 2 from Figures 1 and 2, but here alternatively attached to a carrier 22. Said carrier has a carrier null point 24. The carrier 22 here is a vehicle, which is initially at rest on a ground/floor. The relative bearings R are again measured as preliminary sensor bearings VSL1,2,... at the preliminary times t1,2,..., as in Figures 1 and 2. For the sake of clarity, only the first is depicted subsequently. Just as above, the target sensor bearing ZSL is determined at the target time tZ that comes last.

Unlike in Figures 1 and 2, the preliminary sensor bearings VSL1,2,... (relative bearings R referenced to the sensor null point 4) are not predicted directly onto the prediction sensor bearings PSL1,2,..., but rather are first transformed in terms of geometry (not in terms of timing) to a preliminary carrier bearing VTL1,2,..., which is temporally referenced to, or valid for, the respective preliminary time t1,2,..., i.e. a corresponding bearing is determined. The preliminary carrier bearing VTL1,2,... is that of the object 6 relative to the carrier null point 24, still valid at the respective preliminary time T1.

In contrast to Figures 1 and 2, the respective preliminary carrier bearings VTL1,2,... are then predicted in terms of timing on the basis of the object motion model 14 to form prediction carrier bearings PTL1,2,.... The object motion model 14 is a comprehensive motion model that includes the motion of the object 6 over ground (in an inertial system) and the motion of the carrier 22 over ground (in the inertial system). That is to say an (isolated) carrier prediction is performed in particular using a submodel of the motion model 14. These now apply (virtually) to the target time tZ. Only then is a (now again purely geometric) back-transformation carried out, i.e. the prediction sensor bearing PSL1,2,... of the object 6 relative to the sensor null point 4 is determined for the respective prediction carrier bearing PTL1,2... (with everything now referenced to the target time tZ).

This variant of the method for producing the sensor data 10 is used in particular as a precursor to the following alternative situation, or is combinable therewith:

In Figure 4, the sensor 2 also moves (e.g. that is to say the carrier from Fig. 3 moves, and together with it the sensor 2 permanently mounted thereon) during the period of time between the first preliminary time t1 and the target time tZ, which comes last. In other words, the sensor 2 can alter its local bearing for at least one measurement at all the preliminary times t1,2,... and at the target time tZ.

Figure 4 therefore shows how the sensor data 10 are produced for a sensor 2 that is movable in an inertial system 30, here the fixed world coordinate system. The inertial system 30 in this case has an inertial null point 32. Unlike in Figures 1 and 2, but analogously to Figure 3, the computing module 12 here predicts the respective prediction sensor bearing PSL1,2,... for each of the preliminary sensor bearings VSL1,2,... in such a way that said computing module determines for the respective preliminary sensor bearing VSL1,2,... a preliminary inertial bearing VIL1,2,.... This is a relative bearing of the object 6 in relation to the inertial null point 32. This purely geometric transformation again applies at the respective preliminary time t1,2,....

The computing module 12 now takes the object motion model 14 as a basis for determining - again analogously to above - for each preliminary inertial bearing VIL1,2,..., a respective prediction inertial bearing PIL1,2,... at the time at the target time tZ that the object 6 would thus presumably have adopted relative to the inertial null point 32 at the target time tZ.

Next, the computing module 12 determines - but now taking account, or on the basis, of a sensor motion model 34 - for each of the prediction inertial bearings PIL1,2,... the respective prediction sensor bearing PSL1,2,... of the object 6 relative to the sensor null point 4. This is again a pure local transformation, valid at the target time tZ. The sensor motion model 34 describes the presumed motion of the sensor 2 in the inertial system 30, that is to say relative to the inertial null point 32.

In contrast to Figures 1 to 3, a change of location of the sensor 2 in an inertial system 30 is thus also taken into account for predicting the prediction sensor bearings PSL1,2,... in this case.

The object motion model 14 is a constant velocity model 16. The sensor motion model 34 is a CTRV model. Alternatively, it could also be a CTRA (Constant Turn Rate and Acceleration) model or a different motion model, if a longitudinal acceleration is available.

In one preferred embodiment, the sensor 2 does not just detect the 2D data, as were described above, as part of the relative bearing R both at the preliminary times t1,2... and at the target time tZ. Said data contained only a horizontal position, in polar coordinates of the relative bearings R, at which the object 6/the measurement point 8 lies from the sensor 2/sensor null point 4. Additionally, it now detects a respective radial velocity $\dot{r}$ of the object 6, or measurement point 8, in the respective radial direction with respect to the sensor null point 4.

The computing module 12 takes account of the radial velocity $\dot{r}$ when determining the predicted relative bearings PR, in particular in the object motion model 14. The sensor data 10 in this case are 3D or even 4D (if the elevation angle is also measured) data, as they contain information about the radial velocities $\dot{r}$, and also the changes of range of the respective measurement point 8 from the sensor null point 4. In this respect, 3D or 4D data are also provided in the form of the output signal 20.

The "measurement image" (output data 20) shown in Figure 2 is then thus a "depth image" not only as described above, but rather each of the measurement points also has an associated change of velocity over time.

With regard to the combination, already indicated above, of the embodiments shown in Figures 3 and 4, Figure 4 indicates in dashed lines that the sensor 2 is mounted on the carrier 22 in the form of a motor vehicle 40, which likewise moves in the inertial system 30 in accordance with the sensor motion model 34. The motor vehicle 40 contains the sensor module 50. Besides the sensor 2 and the computing module 12, the motor vehicle 40 also contains an actuator 42. It moves in surroundings 44, in accordance with the inertial system 30. The surroundings 44 contain the object 6.

The aforementioned method is used to produce the sensor data 10 with regard to the object 6. The actuator 42 is then triggered with regard to the object 6 on the basis of the sensor data 10. The object 6 here is a person, and the actuator 42 is a braking system of the motor vehicle 40. Triggering the actuator is used to slow the vehicle 40 in good time if it is approaching the person in the form of the object 6 in a dangerous manner.

The actuator 42 is triggered in such a way that the sensor data 10 are first supplied to an AI module 46, which generates an output signal 48; the actuator 42 is then triggered by the output signal 48.

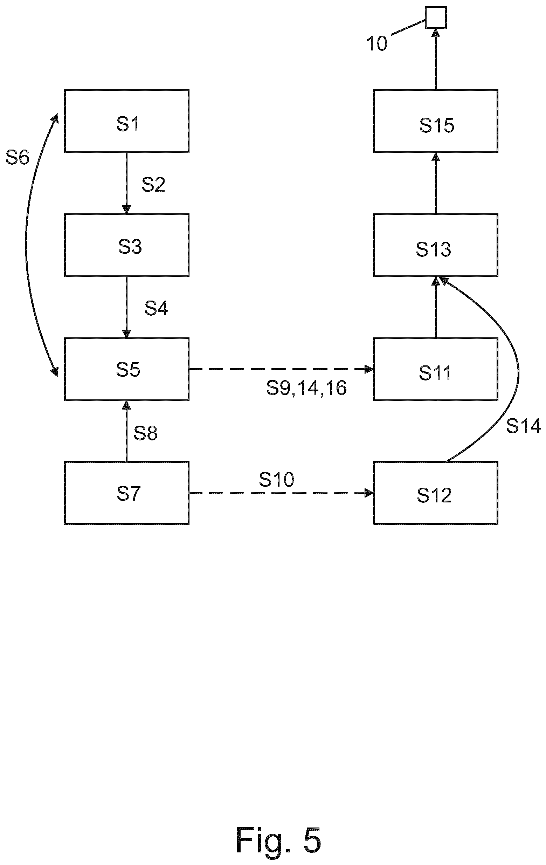

Figure 5 shows a summary of the sequence of the method for producing the sensor data 10.

In a step S1, the sensor 2 takes a respective measurement of the relative bearing R at each of the preliminary times t1,2,.... The measurement is taken in polar coordinates with reference to the sensor coordinate origin, that is to say the sensor null point 4. This involves measuring the preliminary sensor bearings VSL1,2,....

In a step S2, a transformation and rotation between the sensor 2 and an ego coordinate origin, here the carrier null point 24, is performed. The transformations are purely geometric and relate to the respective preliminary time t1,2,.... Ultimately, the preliminary carrier bearings VTL1,2,... are obtained.

In accordance with step S3, the preliminary carrier bearings VTL1,2,... correspond to sensor measurements with reference to the ego coordinate origin, that is to say the carrier null point 24.

In a step S4, a transformation, including rotation and non-inertial corrections, that is to say a geometric transformation to the inertial coordinate system 30, is furthermore performed at the respective preliminary time t1,2,.... This results in the state of the object 6 with reference to the global coordinate origin, here the inertial null point 32. In other words, the preliminary inertial bearings VIL1,2,... are obtained in step S5.

A consistency check is performed in a step S6, as indicated by a double-headed arrow. Here, the unmeasured variables $\dot{\psi}$, $\ddot{r}$ and $\ddot{\psi}$ are determined, in order to align the measured variables r, $\psi$, $\dot{r}$ with an object state in global coordinates with pure radial velocity (with reference to the sensor null point) and with zero acceleration.

In a step S7, the ego state is determined with reference to the global coordinate origin, that is to say the inertial null point 32, that is to say the current local bearing of the sensor 2, or vehicle 50, at the first preliminary time t1.

The corresponding data are added to the preliminary inertial bearing VIL1,2,... in a step S8.

In a step S9, the prediction is performed using a constant velocity model in 2D Cartesian coordinates (CVCV). Step S9 thus involves the object motion model 14 being used in an inertial system. The following should be noted in this regard: in the general case, the "motion model 14" is a "collective motion model" that is made up of all the coordinate transformations and the motion models of the object and the carrier or sensor in an inertial system. However, only the CVCV motion model of the object over ground (inertial system) in the form of a constant velocity model 16 is used here.

In other words, a prediction is made for the object 6 over ground (surroundings 44) with respect to a fixed/ground-based coordinate system and coordinate origin (inertial system 30).

The origin is chosen as the carrier null point 24 at the respective preliminary times t1,2.... The object prediction model is independent of the carrier motion (motion of the carrier 22).

In a step S10, the prediction is made using a constant turn rate and velocity model CTRV or constant turn rate and acceleration model CTRA or a different motion model, that is to say use of the sensor motion model 34, here in the form of a carrier motion model. In other words, a prediction is made for the carrier 22 over ground (surroundings 44) with respect to a fixed/ground-based coordinate system and coordinate origin (inertial system 30). The origin is chosen as the carrier null point 24 at the respective preliminary times t1,2,.... The carrier prediction model (sensor motion model 34) is independent of the object motion (motion of the carrier 22).

In step S10, the bearing of the carrier 22 with respect to the inertial system 30 is thus predicted, irrespective of where the object 6 is situated. This is the intended meaning of the statement that "a sensor motion model (34) of the sensor (2) is taken as a basis for determining for the respective prediction inertial bearing (PIL1,2,...) the prediction sensor bearing (PSL1,2,...) of the object (6) relative to the sensor null point (4)".

A step S11 therefore results in the object state with regard to the global coordinate origin at the target time tZ.

A step S12 results in the ego state with reference to the global coordinate origin likewise at the target time tZ.

In a step S13, the back-transformation of the sensor measurement with regard to the ego coordinate system origin, that is to say the carrier null point 24, is performed. This involves the subtraction together with a rotation and non-inertial corrections with regard to the local bearing of the sensor 2 at the target time tZ being performed in a step S14. Finally, in a step S15, the back-transformation of the sensor measurement (Cartesian) with reference to the sensor coordinate origin, that is to say the sensor null point 4, is performed.

This results in the prediction sensor bearings PSL1,2,..., which are eventually included in the sensor data 10.

The standard coordinate conventions in the art (polar, Cartesian, hybrid/CTRA coordinate transformation) in other transformation steps are not explicitly mentioned.

Reference signs

| | |
|---|---|
| 2 | sensor |
| 4 | sensor null point |

| | |
|---|---|
| 6 | object |
| 8 | measurement point |
| 10 | sensor data |
| 12 | computing module |
| 14 | object motion model |
| 16 | constant velocity model |
| 20 | output signal (sensor) |
| 22 | carrier |
| 24 | carrier null point |
| 30 | inertial system |
| 32 | inertial null point |
| 34 | sensor motion model |
| 40 | motor vehicle |
| 42 | actuator |
| 44 | surroundings |
| 46 | AI module |
| 48 | output signal (AI module) |
| 50 | sensor module |
| 52 | output (sensor module) |
| O1,2,...,Z | location |
| R | relative bearing |
| PR | relative bearing (predicted) |
| t1,2,... | preliminary time |
| tz | target time |
| VSL1,2,... | preliminary sensor bearing |
| ZSL | target sensor bearing |
| PSL1,2,... | prediction sensor bearing |
| VTL1,2,... | preliminary carrier bearing |
| PTL1,2,... | prediction carrier bearing |
| VIL1,2,... | preliminary inertial bearing |
| PIL1,2,... | prediction inertial bearing |
| $\dot{r}$ | radial velocity |
| S1-15 | step |

## Claims

1. Method for producing sensor data (10) of a sensor (2), which has a sensor null point (4) and which is configured to detect a relative bearing (R) of an object (6) relative to the sensor null point (4), in which:

   - the sensor (2):
   - detects a respective first preliminary sensor bearing (VSL1,2,...) of the object (6) as the relative bearing (R) at at least a first preliminary time (t1,2,...),
   - detects a target sensor bearing (ZSL) of the object (6) as the relative bearing (R) at a target time (tz) that comes after the preliminary times (t1,2,...),
   - a computing module (12):
   - for each of the preliminary sensor bearings (VSL1,2,...), at the respective preliminary time (t1,2,...):
   - takes an object motion model (14) of the object (6) as a basis for predicting a respective prediction sensor bearing (PSL1,2,...) at the target time (tz) as a predicted relative bearing (PR),
   - the sensor data (10) are formed as a set comprising the target sensor bearing (ZSL) and the prediction sensor bearings (PSL1,2,...) at the target time (tz).

2. Method according to Claim 1,
   **characterized in that**
   the sensor data (10) are determined as 3D data or 4D data.

3. Method according to either of the preceding claims,
   **characterized in that**

- the sensor data (10) are determined for the sensor (2) attached to a carrier (22), the carrier (22) having a carrier null point (24), for which the computing module (12):
- predicts the respective prediction sensor bearing (PSL1,2,...) for each of the preliminary sensor bearings (VSL1,2,...) in such a way that said computing module:
- determines for the respective preliminary sensor bearing (VSL1,2,...) a preliminary carrier bearing (VTL1,2,...) at the respective preliminary time (t1,2,...) of the object (6) relative to the carrier null point (24),
- takes the object motion model (14) as a basis for predicting a respective prediction carrier bearing (PTL1,2,...) at the target time (tz) of the object (6) relative to the carrier null point (24),
- determines for the respective prediction carrier bearing (PTL1,2,...) the prediction sensor bearing (PSL1,2,...) of the object (6) relative to the sensor null point (4).

4. Method according to one of the preceding claims,
   **characterized in that**

   - the sensor data (10) are produced for the sensor (2), which is movable in an inertial system (30), the inertial system (30) having an inertial null point (32), for which the computing module (12):
   - predicts the respective prediction sensor bearing (PSL1,2,...) for each of the preliminary sensor bearings (VSL1,2,...) in such a way that said computing module:
   - determines for the respective preliminary sensor bearing (VSL1,2,...) a preliminary inertial bearing (VIL1,2,...) at the respective preliminary time (t1,2,...) of the object (6) relative to the inertial null point (32),
   - takes the object motion model (14) as a basis for predicting a respective prediction inertial bearing (PIL1,2,...) of the object (6) relative to the inertial null point (32) at the target time (tz),
   - takes a sensor motion model (34) of the sensor (2) as a basis for determining for the respective prediction inertial bearing (PIL1,2,...) the prediction sensor bearing (PSL1,2...) of the object (6) relative to the sensor null point (4).

5. Method according to one of the preceding claims,
   **characterized in that**
   the object motion model (14) is a constant velocity model (16) referenced to an inertial system and/or - if available - the sensor motion model (34) is a CTRV model or a CTRA model or a different motion model.

6. Method according to one of the preceding claims,
   **characterized in that**

   - the sensor (2) detects a radial velocity ($\dot{r}$) of the object (6) in the radial direction with respect to the sensor null point (4) as part of the relative bearing (R) at at least one of the preliminary times (t1,2,...) and/or at the target time (tz),
   - the computing module (12) takes account of the radial velocity ($\dot{r}$) when determining the predicted relative bearings (PR).

7. Method for controlling a motor vehicle (40), which contains the sensor (2) and the computing module (12) according to one of the preceding claims and an actuator (42), in surroundings (44) that contain the object (6) according to one of the preceding claims, in which:

   - the method according to one of the preceding claims is used to produce the sensor data (10) with regard to the object (6),
   - the actuator (42) is triggered with regard to the object (6) on the basis of the sensor data (10).

8. Method according to Claim 7,
   **characterized in that**

   - the actuator (42) is triggered in such a way that
   - the sensor data (10) are supplied to an AI module (46), which generates an output signal (48),
   - the actuator (42) is triggered by the output signal (46).

9. Sensor module (50), having the sensor (2) and the computing module (12) according to one of Claims 1 to 6, and having an output (52), the sensor module (50) being configured to carry out the method according to one of Claims 1 to 6 and to provide the sensor data (10) at the output (52).

10. Motor vehicle (40), having the sensor module (50) according to Claim 9.

Fig. 1

Fig. 2

Fig. 3

Fig. 4

Fig. 5

Europäisches
Patentamt
European
Patent Office
Office européen
des brevets

# EUROPEAN SEARCH REPORT

**Application Number**

EP 25 18 8394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/077617 A1 (LAWSON ANDREW [GB] ET AL) 7 March 2024 (2024-03-07) * abstract; figures 2a,2b4,5,10A * * paragraphs [0067] - [0072], [0074], [0075], [0080], [0096], [0098], [0101] - [0103], [0105], [0133] * | 1-10 | INV. G01S7/41 G01S7/48 G01S17/34 G01S17/42 G01S17/66 G01S17/931 |
| X | US 2024/201377 A1 (NESTINGER STEPHEN S [US] ET AL) 20 June 2024 (2024-06-20) * abstract; claims 1-6; figure 12 * * column 14, line 40 - column 16, line 8 * * column 17, line 48 - column 18, line 16 * | 1-10 | |
| A | US 10 976 410 B1 (WANG SHAOGANG [US] ET AL) 13 April 2021 (2021-04-13) * abstract; figures 7,10 * * paragraphs [0007], [0045], [0058], [0089], [0091] * | 1-10 | |
| | | | TECHNICAL FIELDS SEARCHED (IPC) G01S |

The present search report has been drawn up for all claims

| Place of search | Date of completion of the search | Examiner |
|---|---|---|
| Munich | 20 October 2025 | Mercier, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 8394

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | | Publication date | Patent family member(s) | | Publication date |
|---|---|---|---|---|---|
| US 2024077617 | A1 | 07-03-2024 | EP | 4260096 A1 | 18-10-2023 |
| | | | US | 2024077617 A1 | 07-03-2024 |
| | | | WO | 2022157161 A1 | 28-07-2022 |
| US 2024201377 | A1 | 20-06-2024 | US | 2024201377 A1 | 20-06-2024 |
| | | | WO | 2024130162 A1 | 20-06-2024 |
| US 10976410 | B1 | 13-04-2021 | US | 10732261 B1 | 04-08-2020 |
| | | | US | 10976410 B1 | 13-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019216147 B3

**Non-patent literature cited in the description**

- **S. BARATAM**. Radar-guided monocular depth estimation and point cloud fusion for 3d object detection. *Master's thesis, Delft University of Technology*, 2022